# EUROPEAN PATENT APPLICATION

(11) **EP 2 584 191 A1**
(43) Date of publication of application: **24.04.2013**
(21) Application number: 11841587.6
(22) Date of filing: 16.06.2011
(51) Int. Cl.: F03D 1/06, F01D 5/14, B23Q 1/76, B24B 19/14

(54) **IMPROVED CENTRE REST FOR ROTARY SEAT OF WIND-TURBINE BLADES**

(30) Priority: 16.06.2010 ES 201030926 P
(71) Applicant: Naditec Ingenieria S.L., 31195 Berrioplano (Navarra) (ES)
(72) Inventor: LAZCOZ SANTESTEBAN, José María, E-31195 Berrioplano (Navarra) (ES)
(74) Representative: Maslanka, Dorota
(86) International application number: PCT/ES2011/000203
(87) International publication number: WO 2012/066158

(57) **Abstract**

The invention in principle comprises a circumferential structure that is seated on rotary rollers coupled to a base platform, the blade being seated on said circumferential structure and also on an end rotary support where the initial cylindrical portion of the blade rests. The invention is characterised in that the circumferential structure comprises a structural ring (7) attached to a central structure (8) provided with a broad front opening (9), which houses a portion of the wind-turbine blade (4) immobilised by means of jaws (10) supported by the central structure (8), and are in turn arranged in correspondence with the sides of said front opening (9), which is demarcated by the edges thereof and by a movable arcuate body (11) that forms part of the circumferential ring (7).

## Description

### Object of the Invention

As expressed in the title of the present specification, the present invention relates to an improved centre rest for the rotary seat of wind turbine blades of the type used for holding wind turbine blades during the manufacturing process, the structure of which substantially facilitates the wind turbine blade manufacturing process.

The centre rest of the invention facilitates loading and unloading the blade on/from said centre rest, in addition to allowing 360° rotations.

### Background of the Invention

A wind turbine blade is continuously rotated around its longitudinal axis arranged in a horizontal direction in its current manufacturing process. This continuous rotation occurs both in the manufacturing process (coating the wind turbine blade structure with layers of fibre) and in the refining process of said blade in which the blade is subjected to deburring and polishing.

Said continuous rotation is transmitted to the wind turbine blade by means of a rotary support located at the root of the blade having a cylindrical structure, i.e., at the end of the blade which would be attached to the wind turbine rotor.

Given the dimensions of the wind turbine blade and in order to prevent buckling or bending thereof, a support also called a centre rest is used at the tip of the blade.

The drawback of the centre rests existing today lies in the difficulty in coupling same to wind turbine blades.

There are two different types of centre rest used today:
- On one hand the closed centre rests which comprise a closed ring into which the wind turbine blade is introduced. The drawback of this centre rest lies in the operation of loading the blade into the centre rest since to perform said loading either the centre rest must be moved from the tip of the blade to the position of the blade where said centre rest must perform its supporting function, or the blade must be moved into the centre rest by means of using an overhead travelling crane and cables.

The drawback of said movements is the high risk of blows and scratches which can occur on the blade when introducing and removing the centre rest to/from the blade.
- Another type of centre rests existing on the market relate to centre rests having a perimetric opening for introducing and removing the blade to/from the centre rest.

The drawback of these centre rests is that the rotating movement of the centre rest is demarcated by the perimetric opening thereof.

### Description of the Invention

To achieve the objectives and to prevent the drawbacks mentioned in the sections above, the invention proposes an improved centre rest for the rotary seat of wind turbine blades which facilitates loading and unloading the wind turbine blade on/from the centre rest, allowing 360° rotations.

The centre rest sits on its circumferential contour on a pair of rotary rollers coupled to a base platform structure resting on the ground by means of wheels to facilitate the positioning thereof along the blade, the initial cylindrical portion of which will in turn sit on an end rotary support, whereby the rotation can be transmitted to the blade assembly, since the rotation thereof could also be performed manually, and even by means of the rotary rollers of the base platform.

Based on this premise, the improved centre rest is characterised in that it comprises a structural ring on which there is fixed a central structure provided with a broad front opening in correspondence with which there are jaws, whereby the blade is firmly secured for assuring its immobilization before rotating the blade to perform the relevant operations thereon.

The front opening of the central structure is demarcated by U-shaped edges and also by a characteristic movable arcuate body that forms part of the structural ring closing the entrance to said front opening, such that the entrance and exit of the blade into/from the space inside the centre rest corresponding with the front opening of the central structure is allowed through said movable arcuate body.

In a first embodiment, the movable arcuate body is coupled to the fixed part of the structural ring by means of an articulated coupling, whereas in a second embodiment the movable arcuate body is moved in a parallel manner with respect to the structural ring being concealed in same when the entrance of the front opening is freed.

The jaws can close in on the blade by means of a manual mode, by means of a mechanical system, by means of an electrical system, by means of a pneumatic system or by means of a hydraulic system.

To facilitate better understanding of this specification, several drawings are attached below as an integral part thereof in which the object of the invention has been depicted with an illustrative and non-limiting character.

### Brief Description of the Drawings

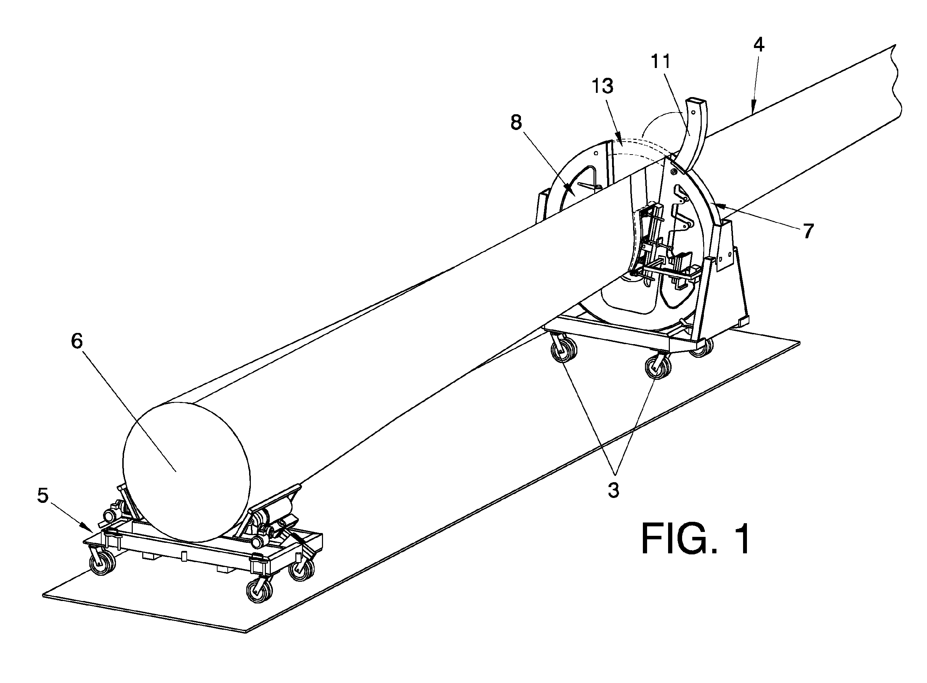

Figure 1 shows a perspective view of a wind turbine blade resting horizontally on an end rotary support and also on an improved centre rest for the rotary seat of wind turbine blades, object of the invention. The centre rest of the invention in turn sits on a pair of rollers coupled to a base platform with support wheels on the ground.

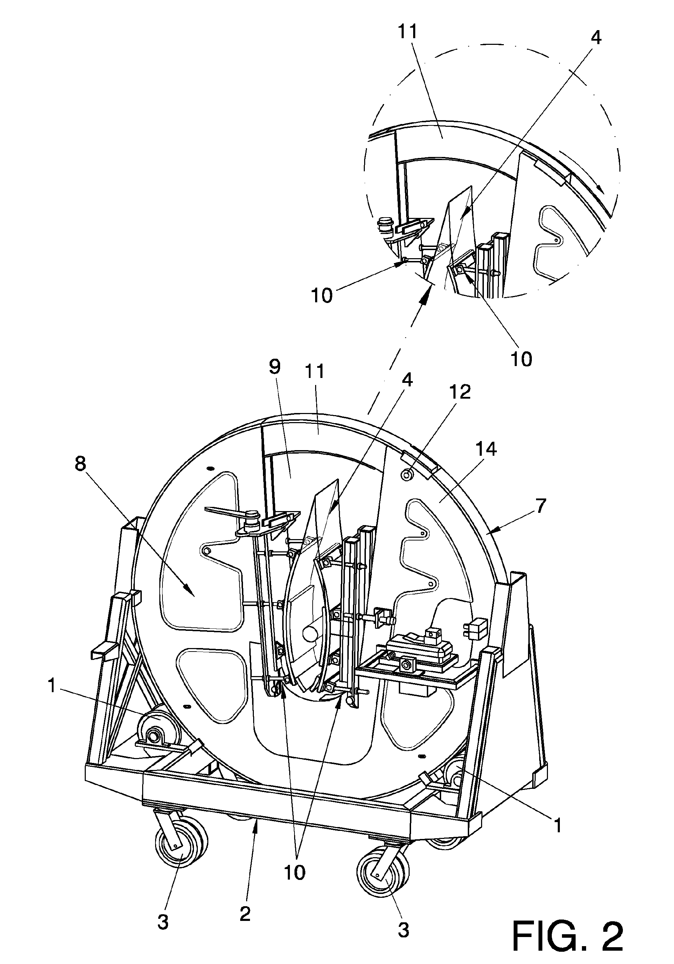

Figure 2 shows a perspective view of the improved centre rest of the invention.

### Description of the Preferred Embodiment

By considering the numbering used in the drawings, the improved centre rest for the rotary seat of wind turbine blades comprises in principle a circumferential structure which is seated on its contour on a pair of rotary rollers 1 coupled to a base platform 2 with support wheels 3 on the ground, the blade 4 being seated on said circumferential structure and also on an end rotary support 5 where the initial cylindrical portion 6 of the blade 4 rests.

Therefore, the centre rest of the invention comprises a structural ring 7 attached to a central structure 8 provided with a broad front opening 9 which houses a portion of the wind turbine blade 4, the blade being secured by means of jaws 10 coupled in correspondence with the sides of said U-shaped front opening 9, the entrance of which is opened and closed by acting on a movable arcuate body 11 that forms part of the structural ring 7.

In a first embodiment, the movable arcuate body 11 is coupled in an articulated manner to a transverse pin 12 established in an end portion of the structural ring 7 close to one side of the entrance 13 of the front opening 9.

In a second embodiment, the movable arcuate body 11 can be telescopically coupled to the inside of a hollow inner space 14 of the structural ring 7 in correspondence with one of the sides of the entrance 13 of the front opening 9, such that in the open position, the movable arcuate body 11 is hidden inside the circumferential ring 7, the blade 4 being loaded in the front opening 9 of the centre rest at this time, for closing the jaws 10 and that entrance 13 of the front opening 9 thereafter by means of the movable arcuate body 11 which will evidently follow the curvature of the structural ring 7 assembly.

To perform the loading operation, the entrance 13 of the front opening 9 will be in an upper part of the centre rest assembly of the invention.

## Claims

1. An improved centre rest for the rotary seat of wind turbine blades, comprising a circumferential structure which is seated on rotary rollers coupled to a base platform, the blade being seated on said circumferential structure and also on an end rotary support where the initial cylindrical portion of the blade rests, **characterised in that** the circumferential structure comprises a structural ring (7) attached to a central structure (8) provided with a front opening (9) which houses a portion of the wind turbine blade (4) immobilised by means of jaws (10) supported by the central structure (8), and are in turn arranged in correspondence with the sides of said front opening (9), which is demarcated by the edges thereof and by a movable arcuate body (11) that forms part of the structural ring (7), said movable arcuate body (11) being able to adopt an open position leaving an entrance (13) into the front opening (9) free and a closed position in which that entrance (13) is closed by means of the movable arcuate body (11) following the continuity of the curvature of the structural ring (7).

2. The improved centre rest for the rotary seat of wind turbine blades according to claim 1, **characterised in that** the movable arcuate body (11) is coupled in an articulated manner by an end portion thereof to the structural ring (7) close to one of the sides of the entrance (13) of the front opening (9) by means of a transverse pin (12).

3. The improved centre rest for the rotary seat of wind turbine blades according to claim 1, **characterised in that** the movable arcuate body (11) is telescopically coupled and guided in a hollow inner space (14) of the structural ring (7) in correspondence with one of the sides of the entrance (13) of the front opening (9), which hollow inner space (14) follows the curvature of the circumferential ring (7).

4. The improved centre rest for the rotary seat of wind turbine blades according to any one of the preceding claims, **characterised in that** the structural ring (7) assembly sits on the rotary rollers (1) of the base platform (2).
